(19) Europäisches Patentamt
European Patent Office
Office européen des brevets

(11) **EP 2 587 716 A1**

(12) **DEMANDE DE BREVET EUROPEEN**

(43) Date de publication:
**01.05.2013 Bulletin 2013/18**

(51) Int Cl.:
***H04L 9/32*** (2006.01)

(21) Numéro de dépôt: **12189812.6**

(22) Date de dépôt: **24.10.2012**

| | |
|---|---|
| (84) Etats contractants désignés:<br>**AL AT BE BG CH CY CZ DE DK EE ES FI FR GB GR HR HU IE IS IT LI LT LU LV MC MK MT NL NO PL PT RO RS SE SI SK SM TR**<br>Etats d'extension désignés:<br>**BA ME** | (71) Demandeur: **Logiways France**<br>**75015 Paris (FR)**<br><br>(72) Inventeur: **Adjedj, Michael**<br>**94380 Bonneuil-Sur-Marine (FR)** |
| (30) Priorité: **28.10.2011 FR 1159809** | (74) Mandataire: **Domenego, Bertrand**<br>**Cabinet Lavoix**<br>**2, place d'Estienne d'Orves**<br>**75441 Paris Cedex 09 (FR)** |

(54) **Procédé de signature cryptographique de messages, procédé de vérification de signature et dispositifs de signature et de vérification correspondants**

(57) Ce procédé de signature cryptographique d'un message comprend la fourniture (20) d'une clé privée x d'un couple de clés asymétriques {x, y}, ladite clé privée x étant un entier positif strictement inférieur à un entier n et ladite clé publique y, appartenant à un groupe algébrique G d'ordre n, étant définie par $y = g^x$, où $g$ est un générateur du groupe algébrique G, et la génération (22) d'une signature dudit message, comprenant deux composants {r, s}. L'étape (22) de génération comprend :
- la génération (26) d'une clé privée $k$ de session,
- la détermination (28) d'une clé publique R de session, telle que $R = g^k$,
- la détermination (28) du premier composant r tel que r = p(R), p désignant une fonction de projection de G sur $[0.....n - 1]^\alpha$, avec $\alpha>0$,
- la détermination (34) du deuxième composant s tel que

$$s = \frac{k}{H(m) + p'(r)x} \bmod n,$$

H désignant une fonction de hachage et p' une fonction de projection de $[0.....n - 1]^\alpha$ sur $[0.....n -1]$.

FIG.2

**Description**

La présente invention concerne un procédé de signature cryptographique d'un message *m*, comprenant la fourniture d'une clé privée x d'un couple de clés asymétriques {x, y}, ladite clé privée x étant un entier positif strictement inférieur à un entier *n* et ladite clé publique y, appartenant à un groupe algébrique G d'ordre *n*, étant définie par $y = g^x$, où *g* est un générateur du groupe algébrique G, et la génération d'une signature cryptographique dudit message *m* au moyen de ladite clé privée x, ladite signature cryptographique comprenant au moins deux composants {r, s}.

Les procédés de signature cryptographique donnent à l'émetteur d'un message la possibilité d'attester de son identité, en attachant à ce message une information, appelée signature numérique. Cette signature numérique permet alors au(x) destinataire(s) du message de vérifier l'identité de l'émetteur.

De tels procédés sont basés sur la cryptographie asymétrique, et en particulier sur l'utilisation d'une paire de clés asymétriques, composée d'une clé privée de signature et d'une clé publique de vérification.

Les protocoles de signatures les plus souvent déployés sont dérivés du protocole de signature d'El-Gamal, dont le principe est de signer le message en utilisant la clé privée de l'émetteur, appelé par la suite signataire, la signature pouvant par la suite être vérifiée par le destinataire, appelé par la suite vérifieur, au moyen de la clé publique de l'émetteur.

La sécurité de tels protocoles ou schémas repose sur un problème algorithmique supposé difficile, appelé problème du logarithme discret. Par difficile, on entend mathématiquement, ou du moins matériellement insoluble, ce qui signifie que les connaissances actuelles ou les dispositifs de calculs existants ne permettent pas de résoudre de tels problèmes en un temps raisonnable.

Ces schémas de signature comprennent une étape d'initialisation, une étape de signature du message, et une étape de vérification.

Lors de l'étape d'initialisation, les paramètres de la signature et les clés publique et privée sont choisis. Cette étape est généralement exécutée une seule fois, c'est-à-dire qu'elle n'est pas mise en oeuvre avant chaque signature de message, à moins que la clé privée n'ait été corrompue. Lors de l'étape de signature, le signataire ajoute une information à un message, calculée à partir de ce message et de sa clé privée.

Par exemple, le protocole de signature DSA (Digital Signature Algorithm) fait appel à une clé privée *x* et à une clé publique (*p, q, g, y*) générées lors d'une étape d'initialisation. *p* et *q* sont des nombres premiers tels que *p*-1 est un multiple de *q*, g et x sont des entiers et $y = g^x \bmod p$.

Pour signer un message *m*, le signataire choisit un nombre k aléatoire tel que $0 < k < q$, et génère, à partir de sa clé privée *x*, une signature du message m comprenant deux entiers (*r, s*) tels que :

$$\begin{cases} r = \left(g^k \bmod p\right) \bmod q \\ s = k^{-1}\left(\mathrm{H}(m) - xr\right) \bmod q \end{cases}$$

où H(*m*) désigne le haché du message *m* par une fonction de hachage cryptographique, par exemple un algorithme SHA (Secure Hash Algorithm).

Pour vérifier une signature (*r, s*) à partir de la clé publique (*p, g, y*), le vérifieur teste si $0 < r < q$ et $0 < s < q$, et calcule :

$$\begin{cases} u_1 = H(m) \cdot s^{-1} \bmod q \\ u_2 = r \cdot s^{-1} \bmod q \\ v = \left(g^{u_1} y^{u_2} \bmod p\right) \bmod q \end{cases}$$

La signature est acceptée si *v* = *r*.

Les variantes du protocole de signature d'El-Gamal utilisant les courbes elliptiques permettent d'obtenir une signature de longueur nettement plus courte que les variantes utilisant les entiers comme éléments de base, tout en conservant une sécurité équivalente. Ces variantes permettent une économie de bande passante lors de la transmission des signatures et de calculs lors de la génération et/ou la vérification de cette signature.

C'est le cas par exemple de l'algorithme de signature ECDSA (Elliptic curve digital signature algorithm).

Dans une implémentation typique d'un tel algorithme, la clé privée *d* est un entier et la clé publique est un point Q d'une courbe elliptique E de générateur P et d'ordre *n*. Ce point Q est dérivé à partir de la clé privée *d*, et vérifie la relation : *Q* = *dP*.

Pour signer un message m, le signataire génère un nombre *k* aléatoire ou aléa temporaire, auquel est associé un point R de la courbe elliptique vérifiant *R* = *kP*. Le nombre *k* est appelé clé privée de session, et le point R est appelé clé publique de session.

Le signataire dérive un entier r à partir du point R, par exemple à partir de l'abscisse du point R, selon un algorithme fixé. Il génère ensuite, à partir de sa clé privée *d*, une signature du message m comprenant les deux entiers (*r*, *s*) tels que $s = k^{-1}$ (H(m) + *dr*)mod *n*.

Pour vérifier la signature, le vérifieur calcule, à partir de la signature (r, s), du message m et de la clé publique Q, les entiers $u_1$ et $u_2$ et le point R' tels que :

$$\begin{cases} u_1 = \text{H'}(m)s^{-1} \bmod n \\ u_2 = rs^{-1} \bmod n \\ R' = u_1 P + u_2 Q \end{cases}$$

où H'(m) est le haché du message m par la même fonction de hachage cryptographique que celle utilisée par le signataire.
Le vérifieur dérive alors un entier *r'* à partir du point R', au moyen de l'algorithme utilisé par le signataire pour dériver l'entier r à partir de R.
La signature est acceptée si *r'=r*.
De tels algorithmes font appel à des inversions modulaires, opérations mathématiques extrêmement coûteuses en termes de ressources calculatoires. De telles opérations sont donc particulièrement pénalisantes lors d'un calcul cryptographique exécuté sur une plateforme avec des ressources limitées, par exemple une carte à puce.
En particulier, la complexité algorithmique des calculs nécessaires à la mise en oeuvre de l'algorithme ECDSA dépend essentiellement des opérations sur la courbe elliptique E, du calcul de l'élément s par le signataire, et du calcul de $s^{-1}$ et R' du côté du vérifieur.
Notamment, les calculs de *s*, de $u_1$ et de $u_2$ mis en oeuvre dans ces algorithmes nécessitent une inversion modulaire. En outre, lorsque les points sur la courbe elliptique sont représentés avec deux coordonnées, chaque addition, ou doublement de points sur la courbe nécessite également au moins une inversion modulaire.
Pour résoudre ce problème, il est connu de déléguer ces calculs à des processeurs auxiliaires plus puissants que celui de la carte à puce. Cependant, pour conserver un niveau de sécurité suffisant, il est nécessaire d'établir pour chaque délégation de calculs un canal sécurisé entre la carte à puce et le processeur auxiliaire.
Outre le coût en terme de ressources de ce canal sécurisé, cette délégation nécessite une synchronisation de la carte à puce avec le processeur auxiliaire, avant la poursuite de l'algorithme de signature. Ceci peut dans certains cas retarder l'exécution de l'algorithme de signature, retard qui augmente proportionnellement avec le nombre d'opérations déléguées.
L'invention a donc pour but de résoudre ces problèmes.
A cette fin, l'invention a pour objet un procédé de signature du type précité, **caractérisé en ce que** l'étape de génération d'une signature cryptographique comprend :

- la génération d'une clé privée *k* de session, *k* étant un entier positif strictement inférieur à *n*,
- la détermination d'une clé publique R de session, telle que $R = g^k$,
- la détermination d'un premier composant *r* de ladite signature cryptographique tel que *r* = *p*(R), où *p* désigne une première fonction de projection dudit groupe algébrique G sur l'ensemble[0.....n-1]$^\alpha$, $\alpha$ étant un entier strictement positif,

- la détermination d'un deuxième composant *s* de ladite signature cryptographique tel que $s = \dfrac{k}{H(m) + p'(r)x} \bmod$

*n*, où *H* désigne une fonction de hachage cryptographique et *p'* désigne une deuxième fonction de projection, de l'ensemble[0.....n-1]$^\alpha$ sur l'ensemble[0.....n-1].

Selon d'autres aspects de l'invention, le procédé de signature comprend l'une ou plusieurs des caractéristiques suivantes :

- ledit groupe algébrique G est un sous-groupe d'ordre n du groupe quotient Z/*p*Z tel que *n* est un diviseur premier de *p*-1, ladite clé publique *y* étant définie en fonction de ladite clé publique x par $y = g^x \bmod p$ et ladite clé publique de session étant un entier R tel que $R = g^k \bmod p$ ;
- ladite première fonction de projection *p* est une projection du groupe algébrique G sur l'ensemble[0.....n-1], lesdits premier et deuxième composants de ladite signature étant définis par :

$$r = \left(g^k \bmod p\right) \bmod n$$

$$s = \frac{k}{H(m)+rx} \bmod n \quad ;$$

- ledit groupe algébrique G est l'ensemble des $n$ points d'une courbe elliptique, ladite clé publique $y$ étant un point Q de ladite courbe elliptique donné par $Q = xP$, où P est un générateur de ladite courbe elliptique, et ladite clé publique de session étant un point R de ladite courbe elliptique tel que $R = kP$ ;
- ladite première fonction de projection $p$ est une projection du groupe G sur $[0.....n\text{-}1]^2$, lesdits premier et deuxième composants de ladite signature étant définis par :

$$r = \left(x_R, z_R\right)$$

$$s = \frac{k}{H(m)+ x_R x} \bmod n$$

où $x_R$ et $z_R$ désignent respectivement la première et la troisième coordonnée du point R dans un système de coordonnées jacobiennes ;
- ladite première fonction de projection $p$ est une projection du groupe G sur $[0.....n\text{-}1]^2$, lesdits premier et deuxième composants de ladite signature étant définis par :

$$r = \left(x_R, z_R\right)$$

$$s = \frac{k}{H(m)+ x_R x} \bmod n$$

où $x_R$ et $z_R$ désignent respectivement la première et la troisième coordonnée du point R dans un système de coordonnées projectives.

L'invention a également pour objet un procédé de vérification d'une signature cryptographique d'un message $m$ obtenue par un procédé de signature cryptographique selon l'invention, **caractérisé en ce qu'il** comprend :

- la détermination d'un élément R' du groupe G vérifiant : $R'=g^{H(m) \cdot s} \cdot y^{p'(r) \cdot s}$,
- la vérification de la cohérence de l'élément R' avec ladite signature,
- l'acceptation de la signature si l'élément R' est cohérent avec ladite signature et le rejet de la signature si l'élément R' n'est pas cohérent avec ladite signature.

Selon d'autres aspects de l'invention, le procédé de vérification comprend l'une ou plusieurs des caractéristiques suivantes :

- la vérification de la cohérence de l'élément R' avec la signature comprend:

    - la détermination de l'image $r'=p(R')$ de l'élément R' par la projection $p$,
    - la vérification de l'équivalence $r \cong r'$ entre r et r', la signature étant acceptée si et seulement si $r \cong r'$ ;

- ledit élément R' du groupe G vérifie $R'=g^{H(m) \cdot s} \cdot y^{r \cdot s} \bmod p$, l'image r' de l'élément R' par la projection $p$ vérifie $r'= (g^{H(m) \cdot s} \cdot y^{r \cdot s} \bmod p) \bmod n$, et la vérification de l'équivalence $r \cong r'$ entre r et r' comprend la vérification de l'égalité $r$

= r', la signature étant acceptée si $r = r'$ et rejetée si $r \neq r'$ ;

- ledit élément R' du groupe G est un point R' de ladite courbe elliptique E vérifiant: $R'=sH(m)P+sx_RQ$, l'image r' du point R' par la projection p vérifie $r'=(x_{R'}, z_{R'})$, où $x_R$' et $z_R$' désignent respectivement les première et troisième coordonnées du point R' dans un système de coordonnées jacobiennes, et la vérification de l'équivalence $r \cong r'$ entre r et r' comprend la vérification de l'égalité $x_{R'}z_R^2 = x_R z_{R'}^2$ mod $n$, la signature étant acceptée si $x_{R'}z_R^2 = x_R z_{R'}^2$ mod $n$ et rejetée si $x_{R'}z_R^2 \neq x_R z_{R'}^2$ mod $n$ ;

- ledit élément R' du groupe G est un point R' de ladite courbe elliptique E vérifiant: $R'=sH(m)P+sx_RQ$, l'image r' du point R' par la projection p vérifie $r'=(x_{R'}, z_{R'})$, où $x_R$' et $z_R$' désignent respectivement les première et troisième coordonnées du point R' dans un système de coordonnées projectives, et la vérification de l'équivalence $r \cong r'$ entre r et r' comprend la vérification de l'égalité $x_{R'}z_R = x_R z_{R'}$ mod $n$, la signature étant acceptée si $x_{R'}z_R = x_R z_{R'}$ mod $n$ et rejetée si $x_{R'}z_R \neq x_R z_{R'}$ mod $n$.

L'invention a également pour objet un dispositif de signature cryptographique d'un message *m* au moyen d'une clé privée x d'un couple de clés asymétriques {x, y}, ladite clé privée x étant un entier positif strictement inférieur à un entier n et ladite clé publique y, appartenant à un groupe algébrique G d'ordre n, étant définie par $y = g^x$, où *g* est un générateur du groupe algébrique G, ledit dispositif comprenant des moyens pour générer une signature cryptographique dudit message *m* au moyen de ladite clé privée x, ladite signature cryptographique comprenant au moins deux composants {r, s}, ledit dispositif étant **caractérisé en ce que** lesdits moyens pour générer une signature cryptographique ({r, s}) comprennent :

- des moyens pour générer une clé privée *k* de session, k étant un entier positif strictement inférieur à *n*,
- des moyens pour déterminer une clé publique R de session, telle que $R = g^k$,
- des moyens pour déterminer un premier composant r de ladite signature cryptographique tel que $r = p(R)$, où *p* désigne une première fonction de projection dudit groupe algébrique G sur l'ensemble $[0.....n-1]^\alpha$, $\alpha$ étant un entier strictement positif, et

- des moyens pour déterminer un deuxième composant *s* de ladite signature cryptographique ({r, s}) tel que

$$s = \frac{k}{H(m) + p'(r)x} \bmod n ,$$ où H désigne une fonction de hachage cryptographique et *p'* désigne une deuxième fonction de projection, de l'ensemble $[0.....n-1]^\alpha$ sur l'ensemble $[0.....n-1]$.

L'invention a également pour objet un dispositif de vérification d'une signature cryptographique d'un message *m* obtenue par un procédé de signature cryptographique selon l'invention, **caractérisé en ce qu'il** comprend :

- des moyens pour déterminer un élément R' du groupe G vérifiant : $R'=g^{H(m)\cdot s} \cdot y^{p'(r)\cdot s}$,
- des moyens pour vérifier la cohérence dudit élément R' avec ladite signature,
- des moyens pour accepter la signature si l'élément R' est cohérent avec ladite signature et rejeter la signature si l'élément R' n'est pas cohérent avec ladite signature.

L'invention sera mieux comprise à l'aide de la description qui va suivre donnée uniquement à titre d'exemple et faite en se référant aux dessins annexés sur lesquels :

- la figure 1 est un schéma synoptique illustrant un émetteur et un récepteur entre lesquels sont échangées des informations,
- la figure 2 est un ordinogramme illustrant les différentes étapes d'un exemple de réalisation d'un schéma de signature comprenant une signature et une vérification de signature selon l'invention, et
- la figure 3 illustre de manière détaillée une étape du schéma représenté sur la figure 2.

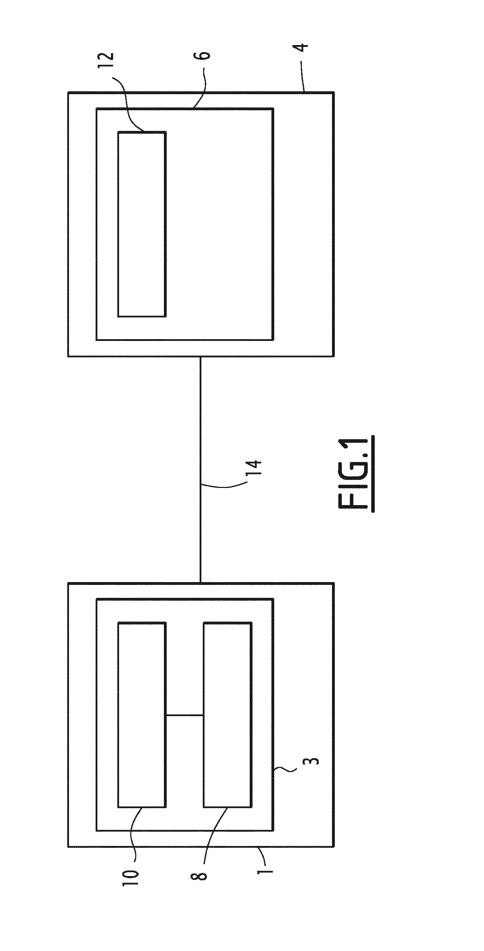

L'invention concerne un procédé de signature cryptographique de messages par un signataire et un procédé de vérification de signature cryptographique par un vérifieur.
On a ainsi représenté sur la figure 1 un émetteur 1, également appelé signataire, comprenant un dispositif 3 de signature selon l'invention, et un récepteur 4, également appelé vérifieur, comprenant un dispositif 6 de vérification selon l'invention.

Bien entendu un nombre quelconque de récepteurs peut être envisagé, un seul récepteur étant représenté sur la figure 1.

Le dispositif 3 de signature comprend au moins une unité 8 de calcul sécurisée, par exemple un crypto-processeur ou une carte à puce, et une unité 10 de calcul non sécurisée, apte à communiquer avec l'unité 8 de calcul sécurisée, et dont la puissance de calcul est supérieure à celle de l'unité 8 de calcul sécurisée.

Le dispositif 6 de vérification comprend une unité 12 de calcul sécurisée.

L'émetteur 1 et le récepteur 4 sont reliés par un canal 14.

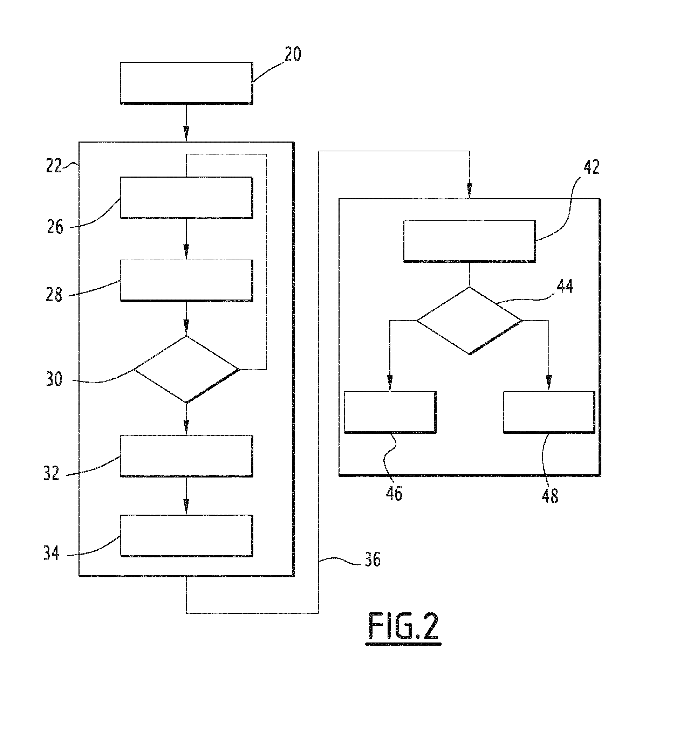

On a représenté sur la figure 2 les étapes mises en oeuvre par le dispositif 3 de signature et le dispositif 6 de vérification pour la mise en oeuvre d'un protocole ou schéma de signature selon l'invention, comprenant la signature d'un message $m$ et la vérification de cette signature.

Ce schéma comprend une étape 20 d'initialisation, une étape 22 de signature et une étape 24 de vérification de la signature.

Dans l'étape 20 d'initialisation, l'émetteur 1 choisit les paramètres de l'algorithme de signature et génère un couple de clés {x, y}, comprenant une clé privée {x} et une clé publique {y}.

Lors de cette étape 20 d'initialisation, l'unité 8 de calcul sécurisée choisit un groupe algébrique G d'ordre n dans lequel le problème du logarithme discret est difficile, c'est-à-dire insoluble en pratique. L'entier n est par exemple un nombre premier. Le groupe G est ainsi muni d'une loi de composition interne. Cette loi de composition interne peut être notée multiplicativement ou additivement. Ainsi, dans la suite de la description et dans les revendications, les additions et/ou multiplications effectuées dans le groupe G désigneront la loi de composition interne, additive ou multiplicative, de ce groupe.

L'unité 8 de calcul sécurisée choisit également un générateur $g$ de ce groupe, élément du groupe G tel que tout élément de ce groupe peut s'écrire sous la forme d'une puissance de $g$.

L'unité 8 de calcul sécurisée choisit par ailleurs une fonction $p$ de projection du groupe G sur {0.....$n$-1}$^\alpha$ où $\alpha$ est un entier strictement positif, par exemple 1 ou 2. L'image d'un élément de G par la projection $p$ est donc un vecteur comprenant $\alpha$ composantes entières.

L'unité 8 de calcul choisit également une fonction $p'$ de projection de [0.....$n$-1]$^\alpha$ sur [0.....$n$-1]. L'image d'un vecteur de [0.....$n$-1]$^\alpha$ par la projection $p'$ est par exemple l'une des composantes de ce vecteur.

Par ailleurs, l'unité 8 de calcul sécurisée choisit un entier $x \in [1...n\text{-}1]$, formant la clé privée du couple de clés {x, y}. Elle génère alors, à partir de la clé privée $x$, la clé publique $y$ du couple de clés {x, y}, en calculant :

$$y = g^x = \underbrace{g * g... * g}_{x} \in \mathbb{G} \qquad (1)$$

la multiplication * désignant ici la loi de composition interne du groupe G. Cette loi de composition interne pourrait bien entendu être notée additivement.

L'unité 8 de calcul sécurisée choisit par ailleurs une fonction $H$ propre à calculer une empreinte d'un message $m$, par exemple une fonction de hachage telle qu'une fonction de type SHA.

Le groupe G choisi, les projections $p$ et $p'$ et la fonction H constituent des paramètres de l'algorithme de signature.

Le signataire 1 envoie alors au vérifieur 4 ces paramètres ainsi que la clé publique y.

Cette étape 20 d'initialisation peut être mise en oeuvre une seule fois, les paramètres et les clés générés lors de cette étape pouvant être utilisés pour signer et vérifier plusieurs messages. Cependant, en cas de découverte par un attaquant de la clé privée x, cette étape 20 d'initialisation peut être exécutée une nouvelle fois, à fin de générer au moins une nouvelle clé privée x et une nouvelle clé publique y associée.

Puis, lorsque le signataire 1 souhaite envoyer un message $m$ au vérifieur 4 tout en donnant à celui-ci la possibilité de vérifier son identité, le signataire 1 met en oeuvre, au moyen du dispositif 3 de signature, une étape 22 de signature du message $m$. Lors de cette étape 22, le dispositif 3 de signature génère une signature {r, s} du message m, comprenant au moins un premier et un second composants respectivement notés $r$ et $s$.

A cette fin, lors d'une étape 26, le dispositif 3 de signature génère une clé privée de session $k \in [1...n\text{-}1]$, par tirage aléatoire.

Cette clé $k$ est temporaire et n'est donc utilisée qu'une seule fois, pour la signature du message $m$.

Puis, dans une étape 28, le dispositif 3 de signature détermine une clé publique de session $R = g^k$ et en déduit le premier composant r de la signature, donné par :

$$r = p\left(g^k\right) \in \left[0.....n\text{-}1\right]^\alpha \qquad (2)$$

où $p$ désigne la fonction de projection choisie lors de l'étape 20. $r$ est donc un vecteur comprenant $\alpha$ composantes entières.

Dans une étape 30, le dispositif 3 de signature compare les composantes du vecteur $r$ à 0. Si au moins une des composantes est nulle, le dispositif 3 de signature génère une nouvelle clé privée de session $k$ dans une nouvelle étape 26.

Si toutes les composantes de $r$ sont non nulles, le dispositif 3 de signature détermine dans une étape 32 une empreinte $H(m)$ du message $m$ par la fonction H. $H(m)$ est par exemple le haché du message $m$ par une fonction de hachage SHA.

Puis, dans une étape 34, le dispositif 3 de signature détermine le deuxième composant s de la signature du message $m$, qui est donné par :

$$s = \frac{k}{H(m) + p'(r)x} \bmod n \qquad (3)$$

A l'issue de l'étape 22 de signature, la signature du message $m$ est ainsi constituée du couple

$$\left\{ r = p\left(g^{k}\right) ; s = \frac{k}{H(m) + p'(r)x} \bmod n \right\} \text{ dans lequel } r \text{ est un vecteur et } s \text{ un entier.}$$

Dans une étape d'émission 36, le signataire 2 envoie au destinataire du message, c'est-à-dire au vérifieur 4, le couple $\{m;\{r, s\}\}$ comprenant le message $m$ et sa signature $\{r, s\}$.

Le vérifieur 4, après réception du couple $\{m;\{r, s\}\}$, vérifie l'identité de l'émetteur du message $m$ dans une étape 24 de vérification. Cette vérification est mise en oeuvre par le dispositif 6 de vérification.

A cette fin, dans une étape 42, le dispositif 6 de vérification calcule, à partir de la signature $\{r, s\}$, du message $m$, de la clé publique $y$ et de la fonction $H$, l'élément R' du groupe G vérifiant :

$$R' = g^{H(m) \cdot s} \cdot y^{p'(r) \cdot s} \qquad (4)$$

Si la signature $\{r, s\}$ est cohérente avec le message m, l'élément R' doit vérifier :

$$\begin{aligned} R' &= g^{H(m) \cdot s} \cdot y^{p'(r) \cdot s} \\ &= g^{H(m) \cdot s + xp'(r)s} \\ &= g^{k} \\ &= R \end{aligned} \qquad (4)$$

Pour vérifier la validité de la signature, le dispositif 6 de vérification calcule ainsi l'image r' de R' par la projection $p$, donnée par :

$$r' = p\left(g^{H(m) \cdot s} \cdot y^{p'(r) s}\right) \qquad (5)$$

Le dispositif 6 de vérification vérifie alors, dans une étape 44, l'équivalence entre r' et r.

Si $r \cong r'$, la signature est acceptée dans une étape 46 et le signataire 2 authentifié.

Dans le cas contraire, la signature est rejetée dans une étape 48.

L'étape 20 d'initialisation et les étapes 28 et 32 de l'étape 22 de signature mettent en oeuvre des calculs simples, tels que des multiplications sur le groupe G et une projection $p$. Ces étapes peuvent donc effectuées par l'unité 8 de calcul sécurisée du dispositif 3 de signature en un temps raisonnable.

De même, l'étape 24 de vérification ne fait intervenir aucune inversion modulaire, de telle sorte que cette étape peut être mise en oeuvre par l'unité 12 de calcul du dispositif 6 de vérification.

Ainsi, seule la mise en oeuvre de l'étape 34 de calcul du deuxième composant s de la signature nécessite d'effectuer une inversion modulaire. Cette inversion est coûteuse en termes de ressources calculatoires. Afin de ne pas retarder la génération de la signature, il est avantageux de déléguer cette opération à l'unité 10 de calcul non sécurisée.

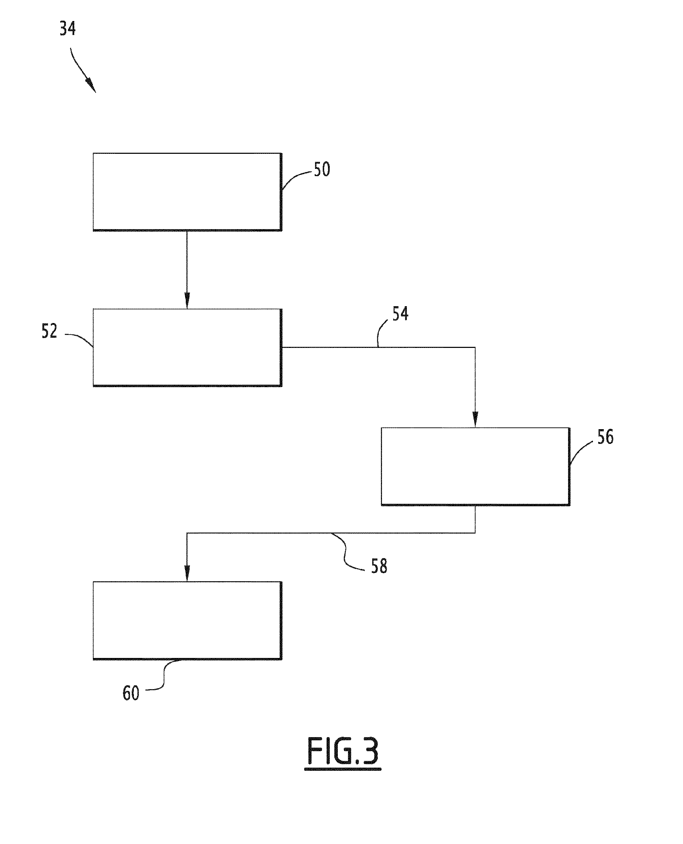

On a ainsi représenté sur la figure 3 les étapes mises en oeuvre par le dispositif 3 de signature pour effectuer l'étape 34.

Dans une première étape 50, l'unité 8 de calcul sécurisée calcule l'entier $w = H(m)+p'(r)x \bmod n$.

L'inversion de cet entier $w$ est déléguée à l'unité 10 de calcul non-sécurisée.

Pour effectuer cette délégation de manière sécurisée, l'unité 8 de calcul choisit dans une étape 52 un entier $c$ de manière aléatoire, et calcule l'entier $w'= c \cdot w$.

Cet entier $w'$ est envoyé dans une étape 54 à l'unité 10 de calcul non sécurisée, qui calcule alors $w'^{-1} = c^{-1}$. $w^{-1} \bmod n$ dans une étape 56 en effectuant une inversion modulaire.

L'unité 10 de calcul non sécurisée transmet dans une étape 58 le résultat de ce calcul à l'unité 8 de calcul sécurisée.

L'unité 8 de calcul sécurisée détermine alors dans une étape 60 le deuxième composant $s = \dfrac{k}{w}$ de la signature en calculant : $c \cdot k \cdot c^{-1}.w^{-1} = k \cdot w^{-1} = s$.

L'unité 8 de calcul sécurisée délègue ainsi l'inversion à l'unité 10 de calcul non sécurisée sans que la valeur de $w$ ou de $w^{-1}$ ne circule entre les unités 8 et 10 de calcul. Ces valeurs ne peuvent donc pas être interceptées par un attaquant.

Ainsi réalisée, l'invention permet de limiter le nombre d'opérations déléguées. Le dispositif 3 de signature n'effectue en effet qu'une seule opération modulaire, tandis que le dispositif 5 de vérification n'en effectue aucune.

Dans un mode particulier de réalisation, le groupe G choisi lors de l'étape 20 d'initialisation est choisi de la manière suivante.

L'unité 8 de calcul sécurisée choisit un entier $p$ premier tel que le problème du logarithme discret soit difficile dans le groupe Z/pZ des entiers modulo $p$, et tel qu'il existe un diviseur premier de $p$-1, noté $n$, tel que le problème du logarithme discret soit difficile dans un groupe générique d'ordre $n$.

L'unité 8 de calcul sécurisée choisit ensuite un élément d'ordre n dans le groupe Z/pZ, noté g. Le groupe G est alors le sous-groupe de Z/pZ engendré par g, d'ordre $n$.

La fonction $p$ de projection du groupe G sur $[0....n\text{-}1]^\alpha$ est une projection de G sur $[0.....n\text{-}1]$ ($\alpha$=1), par exemple une réduction modulo $n$, s'exprimant, pour tout entier $m$ du groupe G, par :

$$p(m) = m \bmod n \ \in \big[0.....n\text{-}1\big] \qquad\qquad (6)$$

La projection $p'$ de $[0.....n\text{-}1]^\alpha$ sur $[0.....n\text{-}1]$ est donc la fonction identité.

Lors de l'étape 20 d'initialisation, l'unité 8 de calcul sécurisée calcule ainsi la clé publique $y$, à partir de la clé privée $x \in [1...n\text{-}1]$, au moyen de l'expression :

$$y = g^{x} \bmod p \in \mathbb{G} \qquad\qquad (7)$$

Les premier et deuxième composants $r$ et $s$ de la signature déterminés lors des étapes 28 et 34 sont alors donnés par :

$$\begin{cases} r = p\big(g^{k} \bmod p\big) = \big(g^{k} \bmod p\big) \bmod n \\[2mm] s = \dfrac{k}{H(m) + p'(r)x} \bmod n = \dfrac{k}{H(m) + rx} \bmod n \end{cases} \qquad (8)$$

Ces deux composants sont donc des nombres entiers.

Dans ce mode de réalisation, lors de l'étape 24 de vérification, le dispositif 6 de vérification calcule l'entier :

$$r' = p\left(g^{H(m) \cdot s} \cdot y^{p'(r) \cdot s}\right) = \left(g^{H(m) \cdot s} \cdot y^{r \cdot s} \bmod p\right) \bmod n \qquad (9)$$

Le dispositif 6 de vérification vérifie alors, dans l'étape 44, l'égalité de r' et r.

Si $r = r'$, la signature est acceptée et le signataire 2 authentifié. Dans le cas contraire, la signature est rejetée.

Dans un deuxième mode de réalisation, le groupe G choisi lors de l'étape 20 d'initialisation est défini par une courbe elliptique E de générateur P et d'ordre $n$.

On rappelle qu'une courbe elliptique E définie sur un corps K est une courbe algébrique non singulière de degré 3 comprenant le point à l'infini et l'ensemble des couples $(X, Y) \in K^2$ qui satisfont l'équation de Weierstrass :

$$Y^2 + a_1 XY + a_3 Y = X^3 + a_2 X^2 + a_4 X + a_6 \qquad (10)$$

avec $a_i \in K$.

Le groupe G est ainsi l'ensemble des n points de la courbe E définie sur un corps K tel que le corps Z/pZ avec p premier, noté $F_p$. Ce groupe est muni d'une loi interne d'addition des points de la courbe E. Dans cet exemple, la loi de composition interne sera donc notée additivement.

Le mode de représentation des coordonnées des points de la courbe E est un paramètre de l'algorithme de signature, choisi lors de l'étape 20 d'initialisation. Ces points sont avantageusement représentés au moyen de trois coordonnées $(x_1, y_1, z_1)$, par exemple en coordonnées projectives ou jacobiennes.

Par exemple, l'équivalence entre les coordonnées jacobiennes $(x_1, y_1, z_1)$ d'un point $P_1$ et les coordonnées affines $(X_1, Y_1)$ de ce point est donnée par :

$$(x_1, y_1, z_1) \longrightarrow (X_1, Y_1) = \left(\frac{x_1}{z_1^2}, \frac{y_1}{z_1^3}\right),$$

$$(X_1, Y_1) \longrightarrow (X_1, Y_1, 1)$$

le point à l'infini étant par ailleurs défini par $z_1 = 0$.

L'équivalence entre les coordonnées projectives $(x_1, y_1, z_1)$ et les coordonnées affines $(X_1, Y_1)$ d'un point $P_1$ est par ailleurs donnée par :

$$(x_1, y_1, z_1) \longrightarrow (X_1, Y_1) = \left(\frac{x_1}{z_1}, \frac{y_1}{z_1}\right),$$

$$(X_1, Y_1) \longrightarrow (X_1, Y_1, 1)$$

le point à l'infini étant défini par $z_1 = 0$.

Dans ce mode de réalisation, la clé publique $y$ est le point Q de la courbe E donné par $Q = xP$.

Par ailleurs, la projection $p$ est une projection du groupe G sur $[0.....n\text{-}1]^2$ (dans ce mode de réalisation, $\alpha = 2$). L'image $r = p(P_1)$ par cette projection $p$ d'un point $P_1$ quelconque du groupe G de coordonnées $(x_1, y_1, z_1)$, est par exemple le vecteur dont les composantes sont les première et troisième coordonnées projectives ou jacobiennes du point : $r = (x_1, z_1)$.

La projection $p'$ est une projection de $[0.....n\text{-}1]^2$ sur $[0.....n\text{-}1]$. L'image de $r$ par la projection $p'$ est par exemple la première composante du vecteur r.

Lors de l'étape 22 de signature, le signataire génère une signature du message m, comprenant un premier composant vectoriel $r$ et un second composant entier $s$.

A cette fin, lors de l'étape 26, le signataire génère une clé privée de session $k \in [1...n\text{-}1]$, puis, lors de l'étape 28, détermine le point R, clé publique de session, vérifiant $R = kP$, de coordonnées projectives ou jacobiennes ($x_R$, $y_R$, $z_R$).

Ce point R est la clé publique de session notée $g^k$ dans l'équation (2) ci-dessus, la notation multiplicative (et l'exponentiation $g^k$) ayant été remplacée par la notation additive (et le produit kP).

Le vecteur r, projection de la clé publique de session R sur $[0.....n\text{-}1]^2$ est donc le vecteur $r=(x_R, z_R)$.

Dans l'étape 30, le dispositif 3 de signature compare les composantes $x_R$ et $z_R$ du vecteur r ainsi calculé à 0. Si $x_R=0$ et/ou $z_R=0$, le dispositif 3 de signature génère une nouvelle clé privée de session $k$ dans une nouvelle étape 26.

Si $x_R \neq 0$ et $z_R \neq 0$, le dispositif 3 de signature détermine dans l'étape 32 une empreinte $H(m)$ du message $m$ par la fonction H.

Lors de l'étape 34, le dispositif 3 de signature détermine le deuxième composant $s$ de la signature du message $m$, qui est donné par :

$$s = \frac{k}{H(m) + p'(r)x} \bmod n = \frac{k}{H(m) + x_R x} \bmod n \qquad (11)$$

A l'issue de l'étape 22 de signature, la signature du message $m$ est ainsi constituée du couple

$$\left\{ r = (x_R, z_R); s = \frac{k}{H(m) + x_R x} \bmod n \right\}.$$

Dans l'étape d'émission 36, le signataire 2 envoie au vérifieur 4 le couple $\{m;\{r, s\}\}$ comprenant le message $m$ et sa signature$\{r, s\}$.

Lors de l'étape 24 de vérification, le dispositif 6 de vérification détermine, à partir de la signature $\{r, s\}$, du message $m$, de la clé publique $y$ et de la fonction H, le point R' donné par :

$$R' = sH(m)P + sp'(r)Q = sH(m)P + sx_R Q \qquad (12)$$

Ce point R' correspond au point R' selon l'équation (4) ci-dessus, la notation multiplicative ayant été remplacée par la notation additive.

Pour vérifier la validité de la signature, le dispositif 6 de vérification calcule alors l'image r' de R' par la projection $p$, donnée par :

$$r' = p(sH(m)P + sp'(r)Q) = (x_{R'}, z_{R'}) \qquad (13)$$

Le dispositif 6 de vérification vérifie alors, dans l'étape 44, l'équivalence entre r' et r.

Par exemple, si la projection $p$ est choisie telle que le projeté d'un point est le vecteur dont les composantes sont les première et troisième coordonnées jacobiennes de ce point, le dispositif 6 de vérification vérifie dans l'étape 44 l'égalité suivante :

$$x_{R'} z_R{}^2 = x_R z_{R'}^2 \bmod n \qquad (14)$$

Cette égalité est vérifiée si et seulement si $\dfrac{x_{R'}}{z_{R'}^2} = \dfrac{x_R}{z_R{}^2}$, c'est-à-dire si les points R et R' ont la même abscisse X. Pour un point de la courbe elliptique d'abscisse X donnée, seules deux ordonnées sont possibles, de telle sorte que la vérification de la cohérence des ordonnées des point R et R' peut être omise.

Si cette égalité (14) est vérifiée, la signature est acceptée et le signataire 2 authentifié. Dans le cas contraire, la signature est rejetée.

Alternativement, si la projection $p$ est choisie telle que le projeté d'un point est le vecteur dont les composantes sont les première et troisième coordonnées projectives de ce point, le dispositif 6 de vérification vérifie dans l'étape 44 l'égalité :

$$x_{R'}z_R = x_R z_{R'} \bmod n \qquad\qquad (15)$$

La représentation des points de la courbe E au moyen de coordonnées projectives ou jacobiennes permet d'éviter toute inversion modulaire. En effet, alors que l'addition ou le doublement de points nécessite le calcul d'inversions modulaires en coordonnées affines, de telles inversions ne sont pas nécessaires en coordonnées jacobiennes ou projectives.

Dans ce mode de réalisation, la signature comprend un vecteur *r* comportant deux composantes et un entier *s*. L'émission 36 demande donc l'envoi par le signataire 2 du message *m* et de trois entiers $x_R$, $z_R$ et s.

Il peut cependant être avantageux de réduire la taille de la signature, par exemple lorsque la bande passante allouée à la signature est restreinte, en remplaçant le vecteur *r* par un unique entier.

Par exemple, dans un mode de réalisation alternatif, le groupe G est défini par une courbe elliptique E de générateur P et d'ordre *n*, conformément au deuxième mode de réalisation décrit ci-dessus, et l'image *r=p(P₁)* par la projection *p* d'un point $P_1$ quelconque du groupe G de coordonnées jacobiennes $(x_1, y_1, z_1)$, est l'entier $r = \dfrac{x_1}{z_1^2}$, c'est-à-dire la première coordonnée affine du point $P_1$.

La projection p' est alors la fonction identité.

Le premier composant r de la signature déterminé à partir de la clé publique de session $R = kP$, de coordonnées jacobiennes $(x_R, y_R, z_R)$, est alors défini par $r = \dfrac{x_R}{z_R^2}$ .

Le deuxième composant *s* de la signature du message *m*, déterminé lors de l'étape 34, est donné par :

$$s = \frac{k}{H(m) + p'(r)x} \bmod n = \frac{k}{H(m) + rx} \bmod n \qquad\qquad (16)$$

A l'issue de l'étape 22 de signature, la signature du message *m* est ainsi constituée du couple

$$\left\{ r = \frac{x_R}{z_R^2} ; s = \frac{k}{H(m) + rx} \bmod n \right\} .$$

Dans l'étape d'émission 36, le signataire 2 envoie au vérifieur 4 le couple {*m*;{*r, s*}} comprenant le message *m* et sa signature{*r, s*}composée uniquement de deux entiers.

Lors de l'étape 24 de vérification, le dispositif 6 de vérification détermine le point R' donné par :

$$R' = sH(m)P + srQ \qquad\qquad (17)$$

Pour vérifier la validité de la signature, le dispositif 6 de vérification calcule alors, dans l'étape 42, l'image r' de R' par la rojection *p*, donnée par :

$$r' = p(sH(m)P + srQ) = \frac{x_R'}{z_R^2{}'} \qquad\qquad (18)$$

Le dispositif 6 de vérification vérifie alors dans l'étape 44 l'égalité r=r' :

Si cette égalité est vérifiée, la signature est acceptée et le signataire 2 authentifié. Dans le cas contraire, la signature est rejetée.

Ce mode de réalisation peut bien entendu être mis en oeuvre en représentant un point P de la courbe E par ses coordonnées projectives, en remplaçant $\dfrac{x_R}{z_R^2}$ et $\dfrac{x_R'}{z_R^{2\prime}}$ par $\dfrac{x_R}{z_R}$ et $\dfrac{x_R'}{z_R'}$.

La projection $p$ d'un point $P_1$ demande le calcul de $\dfrac{x_1}{z_1^2}$ et nécessite donc de réaliser une inversion modulaire supplémentaire.

Une projection $p$ est effectuée par le dispositif 3 de signature lors de l'étape 26 de la signature 22, pour le calcul de $r = \dfrac{x_R}{z_R^2}$. L'inversion modulaire générée par cette inversion peut donc être déléguée à l'unité 10 de calcul non-sécurisée, de manière similaire à la délégation effectuée lors de l'étape 34 et illustrée sur la figure 3.

Pour effectuer cette délégation de manière sécurisée, l'unité 8 de calcul choisit ainsi un entier $c$ de manière aléatoire, et calcule l'entier $w' = c \cdot z_R^2$.

Cet entier w' est envoyé à l'unité 10 de calcul non sécurisée, qui calcule $w'^{-1} = c^{-1} \cdot z_R^{-2}$. L'unité 10 de calcul non sécurisée transmet le résultat de ce calcul à l'unité 8 de calcul sécurisée, qui détermine alors $r = \dfrac{x_R}{z_R^2}$ de la signature en calculant : $c \cdot x_R \cdot c^{-1} . z_R^{-2} = \dfrac{x_R}{z_R^2}$.

Une projection $p$ est également effectuée par le dispositif 6 de vérification lors de l'étape 42 de la vérification 24, pour le calcul de $r' = \dfrac{x_R'}{z_R^{2\prime}}$.

Cette inversion modulaire peut être évitée. Pour cela, dans un mode de réalisation alternatif de l'étape 24 de vérification, le dispositif 6 de vérification détermine le point R' donné par l'équation (16) ci-dessus, et vérifie la cohérence de ce point R' avec le composant $r = \dfrac{x_R}{z_R^2}$ de la signature en vérifiant l'égalité suivante :

$$x_R' = r z_R^{2\prime} \bmod n \qquad\qquad (18)$$

Ainsi, la vérification de la validité de la signature ne requiert aucune inversion modulaire.

Ce mode de réalisation peut également être mis en oeuvre en représentant un point P de la courbe E par ses coordonnées projectives.

Les procédés de signature et de vérification de signature selon l'invention sont donc de coût réduit en termes de ressources calculatoires. Une telle réduction permet de minimiser les délégations de calcul nécessaires, donc d'accélérer la signature et sa vérification, et de réduire la puissance de calcul nécessaire des cartes à puce réalisant les calculs cryptographiques.

Bien entendu d'autres modes de réalisation encore peuvent être envisagés, et les caractéristiques techniques des modes de réalisation et variantes mentionnées ci-dessus peuvent être combinées entre elles.

**Revendications**

1. Procédé de signature cryptographique d'un message $m$, comprenant :

- la fourniture (20) d'une clé privée x d'un couple de clés asymétriques {x, y}, ladite clé privée x étant un entier positif strictement inférieur à un entier n et ladite clé publique y, appartenant à un groupe algébrique G d'ordre

$n$, étant définie par $y = g^x$, où $g$ est un générateur du groupe algébrique G,
- la génération (22) d'une signature cryptographique ({r, s}) dudit message $m$ au moyen de ladite clé privée x, ladite signature cryptographique ({r, s}) comprenant au moins deux composants {r, s},

ledit procédé étant **caractérisé en ce que** l'étape (22) de génération d'une signature cryptographique ({r, s}) comprend :

- la génération (26) d'une clé privée $k$ de session, $k$ étant un entier positif strictement inférieur à $n$,
- la détermination (28) d'une clé publique R de session, telle que $R = g^k$,
- la détermination (28) d'un premier composant $r$ de ladite signature cryptographique ({r, s}) tel que $r=p(R)$, où $p$ désigne une première fonction de projection dudit groupe algébrique G sur l'ensemble$[0.....n\text{-}1]^\alpha$, $\alpha$ étant un entier strictement positif,
- la détermination (34) d'un deuxième composant $s$ de ladite signature cryptographique ({r, s}) tel que mod $n$, où $H$ désigne une fonction de hachage cryptographique et $p'$ désigne une deuxième fonction de projection, de l'ensemble$[0.....n\text{-}1]^\alpha$ sur l'ensemble$[0.....n\text{-}1]$.

**2.** Procédé de signature cryptographique selon la revendication 1, **caractérisé en ce que** ledit groupe algébrique G est un sous-groupe d'ordre n du groupe quotient Z/$p$Z tel que n est un diviseur premier de $p$-1, ladite clé publique $y$ étant définie en fonction de ladite clé publique x par $y = g^x$ mod $p$ et ladite clé publique de session étant un entier R tel que $R = g^k$ mod $p$.

**3.** Procédé de signature cryptographique selon la revendication 2, **caractérisé en ce que** ladite première fonction de projection $p$ est une projection du groupe algébrique G sur l'ensemble$[0.....n\text{-}1]$, lesdits premier et deuxième composants de ladite signature étant définis par :

$$r = \left(g^k \bmod p\right) \bmod n$$

$$s = \frac{k}{H(m) + rx} \bmod n$$

**4.** Procédé de signature cryptographique selon la revendication 1, **caractérisé en ce que** ledit groupe algébrique G est l'ensemble des n points d'une courbe elliptique (E), ladite clé publique $y$ étant un point Q de ladite courbe elliptique (E) donné par $Q = xP$, où P est un générateur de ladite courbe elliptique (E), et ladite clé publique de session étant un point R de ladite courbe elliptique (E) tel que $R = kP$.

**5.** Procédé de signature cryptographique selon la revendication 4, **caractérisé en ce que** ladite première fonction de projection $p$ est une projection du groupe G sur $[0.....n\text{-}1]^2$, lesdits premier et deuxième composants de ladite signature étant définis par :

$$r = \left(x_R, z_R\right)$$

$$s = \frac{k}{H(m) + x_R x} \bmod n$$

où $x_R$ et $z_R$ désignent respectivement la première et la troisième coordonnée du point R dans un système de coordonnées jacobiennes.

**6.** Procédé de signature cryptographique selon la revendication 4, **caractérisé en ce que** ladite première fonction de projection $p$ est une projection du groupe G sur $[0.....n\text{-}1]^2$, lesdits premier et deuxième composants de ladite signature étant définis par :

$$r = \left( x_R, z_R \right)$$

$$s = \frac{k}{H(m) + x_R x} \bmod n$$

où $x_R$ et $z_R$ désignent respectivement la première et la troisième coordonnée du point R dans un système de coordonnées projectives.

7. Procédé de vérification d'une signature cryptographique ({r, s}) d'un message *m* obtenue par un procédé de signature cryptographique selon l'une quelconque des revendications précédentes, **caractérisé en ce qu'il** comprend :

   - la détermination (42) d'un élément R' du groupe G vérifiant : $R' = g^{H(m).s} \cdot y^{p'(r).s}$,
   - la vérification (42, 44) de la cohérence de l'élément R' avec ladite signature ({r, s}),
   - l'acceptation (46) de la signature si l'élément R' est cohérent avec ladite signature ({r, s}) et le rejet (48) de la signature si l'élément R' n'est pas cohérent avec ladite signature ({r, s}).

8. Procédé de vérification selon la revendication 7, **caractérisé en ce que** la vérification (42, 44) de la cohérence de l'élément R' avec la signature ({r, s}) comprend :

   - la détermination (42) de l'image *r'=p(R')* de l'élément R' par la projection *p*,
   - la vérification (44) de l'équivalence $r \cong r'$ entre r et r', la signature étant acceptée si et seulement si $r \cong r'$.

9. Procédé de vérification selon la revendication 8, ladite signature cryptographique ({r, s}) étant obtenue par un procédé de signature cryptographique selon la revendication 3, **caractérisé en ce que** :

   - ledit élément R' du groupe G vérifie $R' = g^{H(m).s} \cdot y^{r.s} \bmod p$,
   - l'image r' de l'élément R' par la projection *p* vérifie $r' = (g^{H(m).s} \cdot y^{r.s} \bmod p) \bmod n$, et
   - la vérification (44) de l'équivalence $r \cong r'$ entre r et r' comprend la vérification (44) de l'égalité *r = r'*, la signature étant acceptée si *r = r'* et rejetée si $r \neq r'$.

10. Procédé de vérification selon la revendication 8, ladite signature cryptographique ({r, s}) étant obtenue par un procédé de signature cryptographique selon la revendication 5, **caractérisé en ce que** :

    - ledit élément R' du groupe G est un point R' de ladite courbe elliptique E vérifiant : $R' = sH(m)P + sx_R Q$,
    - l'image r' du point R' par la projection *p* vérifie $r' = (x_{R'}, z_{R'})$, où $x_R'$ et $z_R'$ désignent respectivement les première et troisième coordonnées du point R' dans un système de coordonnées jacobiennes, et

    - la vérification (44) de l'équivalence $r \cong r'$ entre r et r' comprend la vérification (44) de l'égalité $x_{R'} z_R^2 = x_R z_{R'}^2 \bmod n$, la signature étant acceptée si $x_{R'} z_R^2 = x_R z_{R'}^2 \bmod n$ et rejetée si

    $x_{R'} z_R^2 \neq x_R z_{R'}^2 \bmod n$.

11. Procédé de vérification selon la revendication 8, ladite signature cryptographique ({r, s}) étant obtenue par un procédé de signature cryptographique selon la revendication 6, **caractérisé en ce que** :

    - ledit élément R' du groupe G est un point R' de ladite courbe elliptique E vérifiant : $R' = sH(m)P + sx_R Q$,
    - l'image r' du point R' par la projection *p* vérifie $r' = (x_{R'}, z_{R'})$, où $x_R'$ et $z_R'$ désignent respectivement les première et troisième coordonnées du point R' dans un système de coordonnées projectives, et
    - la vérification (44) de l'équivalence $r \cong r'$ entre r et r' comprend la vérification (44) de l'égalité $x_R z_{R'} = x_{R'} z_R$ mod *n*, la signature étant acceptée si $x_R z_{R'} = x_{R'} z_R$ mod n et rejetée si $x_{R'} z_R \neq x_R z_{R'}$ mod *n*.

12. Dispositif (3) de signature cryptographique d'un message *m* au moyen d'une clé privée x d'un couple de clés asymétriques {x, y}, ladite clé privée x étant un entier positif strictement inférieur à un entier n et ladite clé publique y, appartenant à un groupe algébrique G d'ordre *n*, étant définie par $y = g^x$, où *g* est un générateur du groupe algébrique G, ledit dispositif (3) comprenant des moyens (8, 10) pour générer une signature cryptographique ({r, s}) dudit message *m* au moyen de ladite clé privée x, ladite signature cryptographique ({r, s}) comprenant au moins deux composants {r, s},

ledit dispositif (3) étant **caractérisé en ce que** lesdits moyens (8, 10) pour générer une signature cryptographique ({r, s}) comprennent :

- des moyens (8) pour générer une clé privée *k* de session, *k* étant un entier positif strictement inférieur à *n*,
- des moyens (8) pour déterminer une clé publique R de session, telle que $R = g^k$,
- des moyens (8) pour déterminer un premier composant *r* de ladite signature cryptographique tel que *r=p(R)*, où *p* désigne une première fonction de projection dudit groupe algébrique G sur l'ensemble[0.....*n*-1]$^\alpha$, α étant un entier strictement positif, et

- des moyens (8, 10) pour déterminer un deuxième composant *s* de ladite signature cryptographique ({r, s}) tel

que $s = \dfrac{k}{H(m) + p'(r)x} \bmod n$, où H désigne une fonction de hachage cryptographique et *p'* désigne une deuxième fonction de projection, de l'ensemble[0.....*n*-1]$^\alpha$ sur l'ensemble[0.....*n*-1].

**13.** Dispositif (6) de vérification d'une signature cryptographique ({r, s}) d'un message *m* obtenue par un procédé de signature cryptographique selon l'une quelconque des revendications 1 à 6, **caractérisé en ce qu'il** comprend :

- des moyens (12) pour déterminer un élément R' du groupe G vérifiant : $R' = g^{H(m) \cdot s} \cdot y^{p'(r) \cdot s}$,
- des moyens (12) pour vérifier la cohérence dudit élément R' avec ladite signature ({r, s}),
- des moyens (12) pour accepter la signature si l'élément R' est cohérent avec ladite signature ({r, s}) et rejeter la signature si l'élément R' n'est pas cohérent avec ladite signature ({r, s}).

FIG.1

**FIG.2**

34

50

52

54

56

58

60

<u>FIG.3</u>

**EP 2 587 716 A1**

Europäisches Patentamt
European Patent Office
Office européen des brevets

# RAPPORT DE RECHERCHE EUROPEENNE

Numéro de la demande

EP 12 18 9812

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ADRIAN ANTIPA ET AL: "Accelerated Verification of ECDSA Signatures", 1 janvier 2006 (2006-01-01), SELECTED AREAS IN CRYPTOGRAPHY LECTURE NOTES IN COMPUTER SCIENCE;;LNCS, SPRINGER, BERLIN, DE, PAGE(S) 307 - 318, XP019029549, ISBN: 978-3-540-33108-7 * section 2 section 4.1 * | 1-5, 7-10,12, 13 | INV. H04L9/32 |
| X | Toshio Hasegawa ET AL: "A small and fast software implementation of elliptic curve cryptosystem over GF(p) on a 16-bit microcomputer", IEICE TRANSACTIONS on Fundamentals of Electronics, Communications and Computer Sciences Vol.E82-A No.1, 20 janvier 1999 (1999-01-20), pages 98-106, XP055030022, DOI: 10.1.1.29.7732 Extrait de l'Internet: URL:http://citeseerx.ist.psu.edu/viewdoc/download?doi=10.1.1.29.7732&rep=rep1&type=pdf [extrait le 2012-06-15] * scetion 2.3 section 2.4 * | 1-4,6-9, 11-13 | |
| A | US 6 279 110 B1 (JOHNSON DONALD B [US] ET AL) 21 août 2001 (2001-08-21) * colonne 4, ligne 22 - colonne 5, ligne 12; figure 2 * | 1-13 | DOMAINES TECHNIQUES RECHERCHES (IPC) H04L |

Le présent rapport a été établi pour toutes les revendications

| Lieu de la recherche | Date d'achèvement de la recherche | Examinateur |
|---|---|---|
| Munich | 12 février 2013 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 18 9812

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-02-2013

| Document brevet cité au rapport de recherche | | Date de publication | Membre(s) de la famille de brevet(s) | | Date de publication |
|---|---|---|---|---|---|
| US 6279110 | B1 | 21-08-2001 | AU | 1017599 A | 31-05-1999 |
| | | | CA | 2308170 A1 | 20-05-1999 |
| | | | EP | 1033009 A1 | 06-09-2000 |
| | | | JP | 4649040 B2 | 09-03-2011 |
| | | | JP | 2001523067 A | 20-11-2001 |
| | | | US | 6279110 B1 | 21-08-2001 |
| | | | US | 2001008013 A1 | 12-07-2001 |
| | | | US | 2008005570 A1 | 03-01-2008 |
| | | | US | 2009319790 A1 | 24-12-2009 |
| | | | US | 2011258455 A1 | 20-10-2011 |
| | | | WO | 9925092 A1 | 20-05-1999 |

EPO FORM P0460

Pour tout renseignement concernant cette annexe : voir Journal Officiel de l'Office européen des brevets, No.12/82